# EUROPÄISCHE PATENTSCHRIFT

(11) **EP 1 090 449 B1**
(45) Veröffentlichungstag und Bekanntmachung des Hinweises auf die Patenterteilung: **17.08.2005**
(21) Anmeldenummer: 99939350.7
(22) Anmeldetag: 16.06.1999
(51) Int. Cl.: H02J 3/01

(54) **HYBRIDFILTER FÜR EIN WECHSELSPANNUNGSNETZ**
HYBRID FILTER FOR AN ALTERNATING CURRENT NETWORK
FILTRE HYBRIDE POUR RESEAU A TENSION ALTERNATIVE

(30) Priorität: 23.06.1998 DE 19827755
(43) Veröffentlichungstag der Anmeldung: 11.04.2001
(73) Patentinhaber: SIEMENS AKTIENGESELLSCHAFT, 80333 München (DE)
(72) Erfinder: PEREIRA, Marcos, D-91056 Erlangen (DE); SADEK, Kadry, D-91056 Erlangen (DE)
(86) Internationale Anmeldenummer: PCT/DE1999/001771
(87) Internationale Veröffentlichungsnummer: WO 1999/067868

(56) Entgegenhaltungen:
- US-A- 5 731 965
- US-A- 5 910 889
- Patent Abstracts of Japan, Band 991, Nr (-); & JP,A,02262841 (NICHICON CORP), 1990-10-25

## Beschreibung

Die Erfindung bezieht sich auf ein Hybridfilter für ein Wechselspannungsnetz, wobei das Hybridfilter einen passiven und einen aktiven Filter aufweist, die elektrisch in Reihe geschaltet sind, und wobei das aktive Filter eine Spannungsquelle aufweist.

Ein derartiges Hybridfilter ist aus der US 5,731,965 bereits bekannt. Das dort offenbarte Hybridfilter ist parallel zu einem Wechselspannungsnetz geschaltet, das lastseitig mit einem Wechselrichter als nichtlineare Last verbunden ist. Das Hybridfilter umfasst ein passives Filter sowie ein aktives Filter, wobei das aktive Filter und das passive Filter in Reihenschaltung angeordnet sind.

Aus der JP,A,02262841 ist eine Vorrichtung zum Unterdrücken von Oberwellen bekannt, die in Parallelschaltung zu einem Wechselstromnetzwerk angeordnet sind. Die Vorrichtung umfasst passive Filter, die eine Reihenschaltung aus Kondensator und Spule aufweisen.

Ein gattungsgemäßes Hybridfilter, jedoch bei einem Gleichspannungsnetz eingesetzt, ist aus dem Aufsatz "Application of Power Active Filters for Mitigation of Harmonics", abgedruckt im Tagungsband "Stockholm Powertech", Stockholm, Juni 1995, bekannt. Das aktive Filter weist eine Spannungsquelle auf und generiert Spannungen, um Oberschwingungen im Netz zu eleminieren. Dazu ist dieses aktive Filter nicht direkt an das Netz angeschlossen, sondern elektrisch in Reihe mit einer Ankoppelungsschaltung geschaltet, welche die Strom- und Spannungsanforderungen an das aktive Filter begrenzt. Diese Ankoppelungsschaltung kann ein Transformator, ein Koppelkondensator, ein abgestimmtes Filter oder eine Kombination dieser Elemente sein. Im Tagungsaufsatz ist das aktive Filter mittels eines abgestimmten Filters und eines Transformators mit dem Gleichspannungsnetz verknüpft. Eine derartige Filteranordnung wird auch als Hybridfilter bezeichnet.

Als abgestimmtes Filter ist ein Doppelfilter vorgesehen. Mit einem Doppelfilter erreicht man bei relativ kleiner Grundschwingungs-Blindleistung bei mehreren Resonanzfrequenzen niedrige Impedanzen. Nur die Kondensatorbatterie muß für Hochspannung ausgelegt werden, wodurch sich der wesentliche Kostenvorteil eines Doppelfilters begründet.

In einem Wechselstromnetz dient häufig das passive Filter auch zur Kompensation von Blindleistung. Daher weist die Grundschwingungskomponente des Filterstroms einen relativ großen Wert auf, wie es beispielsweise bei einer Hochspannungs-Gleichstrom-Übertragungs-Anlage (HGÜ-Anlage) der Fall ist. Wenn ein aktives Filter nun in Reihe mit so einem passiven Filter geschaltet ist, bedeutet dies eine hohe Belastung des aktiven Filters, da die Grundschwingungskomponente auch durch das aktive Filter fließt. Die Folge einer derartigen Belastung kann sein, daß das aktive Filter nach kurzer Zeit aus dem Hybridfilter geschaltet wird, um die Halbleiterbauelemente seines Pulsstromrichters zu schützen. Man kann allerdings auch die Halbleiterbauelemente für die Grundschwingungskomponente des Filterstromes auslegen. Nachteil dieser Strategie ist, daß einerseits wahrscheinlich keine Halbleiterbauelemente im Handel erhältlich sind, die einerseits die gewünschte Strom- und Spannungsbelastung und andererseits eine hohe Schaltfrequenz aufweisen, und andererseits das aktive Filter und damit das Hybridfilter sehr teuer wird, so daß das Verhältnis von Nutzen zu Kosten eines derartigen Hybridfilters nicht mehr wirtschaftlich ist.

In dem Aufsatz "Ein Regelverfahren zur aktiven Filterung in der Starkstromtechnik" von C. Filtermann, F. Hillenbrand und C. Landgraf, abgedruckt in der DE-Zeitschrift "Regelungstechnik", 1982, Heft 8, Seiten 263 bis 270, wird ein Konzept vorgeschlagen, mit dem die Spannungsquelle des aktiven Filters nicht mehr mit dem Grundschwingungsstrom belastet wird. Dieses Konzept ist im Bild 2a dieses Aufsatzes schematisch veranschaulicht und besteht aus einem Parallelschwingkreis, der elektrisch parallel zum Hybridfilter geschaltet und auf die Netzfrequenz abgestimmt ist. Damit wird die Spannungsquelle des aktiven Filters nicht mehr mit dem Grundschwingungsstrom belastet, so daß diese nur den Oberschwingungen anzupassen ist. Für eine erforderliche Blindleistungskompensation sind allerdings Zusatzmaßnahmen erforderlich.

Der Erfindung liegt nun die Aufgabe zugrunde, ein derartig bekanntes Hybridfilter derart weiterzubilden, daß die Grundschwingungskomponente des Filterstromes von seinem aktiven Filter auf einfache Weise ferngehalten und eine Blindleistungskompensation von seinem passiven Filter bewerkstelligt werden kann.

Diese Aufgabe wird erfindungsgemäß gelöst mit den kennzeichnenden Merkmalen des Anspruchs 1.

Dadurch, daß elektrisch parallel zum aktiven Filter des Hybridfilters ein auf die Netzfrequenz des Wechselspannungsnetzes abgestimmtes Filter geschaltet ist, wird die Grundschwingungskomponente des Filterstromes zum Bezugspotential abgeleitet. Aus diesem Grund wird dieses Filter auch als Ableitungszweig bezeichnet. Dieser Ableitungszweig weist für die Grundschwingungskomponente des Filterstromes annähernd einen Kurzschluß auf, wogegen im Frequenzbereich des aktiven Filters dieser einen nennenswerten Widerstand aufweist. Dadurch, daß die Grundschwingungskomponente des Filterstromes des Hybridfilters durch den Ableitungszweig fließt, wird das aktive Filter nicht mehr damit belastet, so daß das aktive Filter nur auf die zu eliminierenden Oberschwingungsströme ausgelegt werden kann. Somit kann man mit einfachen Mitteln ein für ein Gleichspannungsnetz bekanntes Hybridfilter auch bei einem Wechselspannungsnetz einsetzen, ohne daß das aktive Filter überdimensioniert werden muß.

Mit einem abgestimmten Filter kann eine sehr niedrige Impedanz bei einer Resonanzfrequenz, auch bei relativ kleiner Grundschwingungs-Blindleistung des Filterkreises, erreicht werden. Das Filter kann jedoch bei Frequenzabweichung im Netz oder aufgrund der Änderung der Kondensatorkapazität infolge der Temperatur leicht verstimmt werden. Diese Verstimmung bewirkt dann, daß ein beträchtlicher Teil der Grundschwingungskomponente des Filterstromes durch das aktive Filter fließt. Infolge dieser Belastung des aktiven Filters kann es passieren, daß das aktive Filter aus dem Hybridfilter geschaltet wird. Somit kann das Hybridfilter seine Aufgabe nicht mehr erfüllen, wodurch das Verhältnis von Nutzen zu Kosten sich wieder verschlechtert.

Bei einer besonders vorteilhaften Ausführungsform dieses Hybridfilters ist eine Regleranordnung vorgesehen, die eingangsseitig mit zwei Stromwandlern und ausgangsseitig mittels eines Addierers mit einem Steuereingang des aktiven Filters verbunden ist, wobei von den beiden Stromwandlern einer dem aktiven Filter und der andere dem passiven Filter zugeordnet ist. Mittels dieser Regleranordnung kann der Teil der Grundschwingungskomponente des Filterstromes, der durch das aktive Filter infolge einer Verstimmung fließt, ausgeregelt werden. Damit wird die Belastung des aktiven Filters durch Grundschwingungsstromkomponenten des Filterstromes während eines Einschwingvorganges und während des Dauerbetriebs trotz einer Verstimmung des Ableitungszweiges erheblich verringert bzw. eliminiert.

Vorteilhafte Ausgestaltungen des erfindungsgemäßen Hybridfilters sind den Unteransprüchen 3 bis 5 zu entnehmen.

Zur weiteren Erläuterung der Erfindung wird auf die Zeichnung Bezug genommen, in der zwei Ausführungsformen des erfindungsgemäßen Hybridfilters schematisch veranschaulicht sind.
- FIG 1: zeigt eine erste Ausführungsform des erfindungsgemäßen Hybridfilters, in
- FIG 2: ist ein Beispielfall näher veranschaulicht, die
- FIG 3: zeigt eine zweite Ausführungsform des erfindungsgemäßen Hybridfilters, wobei in der
- FIG 4: ein Blockschaltbild einer Regleranordnung des Hybridfilters gemäß FIG 3 näher dargestellt ist, die
- FIG 5: veranschaulicht in einem Diagramm über der Zeit t den Verlauf des Stromes des aktiven Filters des Hybridfilters nach FIG 3, und in
- FIG 6: ist der zugehörige Spannungsverlauf in einem Diagramm über der Zeit t dargestellt.

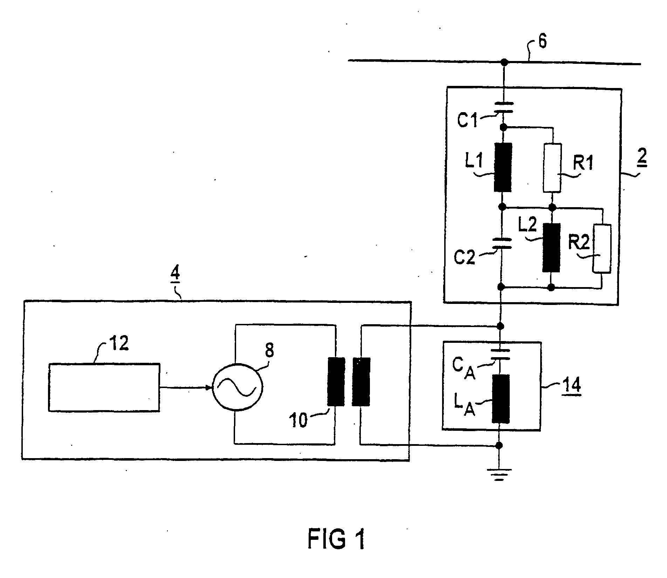

Die FIG 1 zeigt eine erste Ausführungsform des erfindungsgemäßen Hybridfilters, das aus einem passiven Filter 2 und einem aktiven Filter 4 besteht, die elektrisch in Reihe geschaltet sind. Als passives Filter 2 ist ein Doppelfilter vorgesehen, deren passive Komponenten C1, L1, R1 und C2, L2, R2 beispielsweise auf die 11. und 13. Oberwelle und die 23. und 25. Oberwelle abgestimmt sind. Nur der Kondensator C1 ist für den Hochspannungswert des Wechselspannungsnetzes 6, an dem das Hybridfilter angeschlossen ist, aufgebaut. Als Kondensator C1 ist eine Kondensatorbank vorgesehen, deren Kondensatoreinheiten in Gerüsten eingebaut sind.

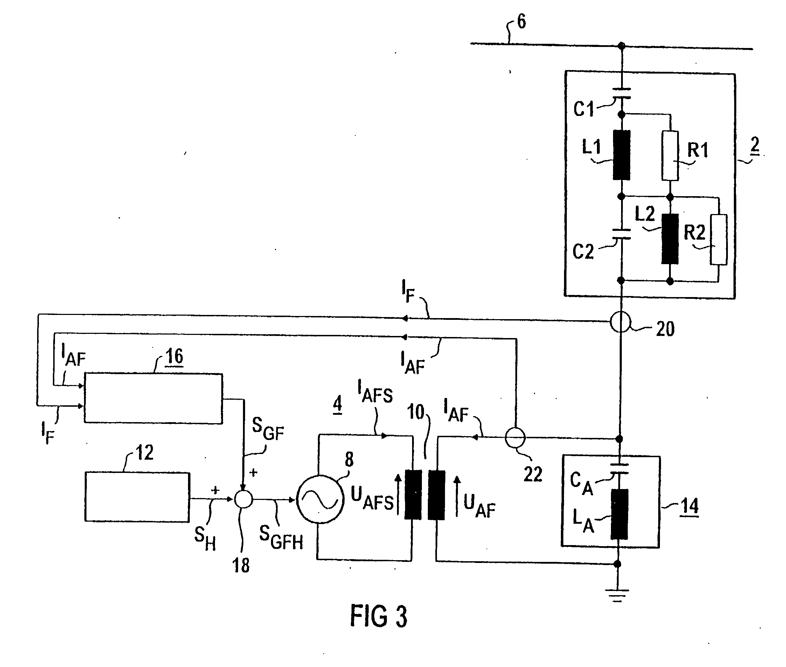

Das aktive Filter 4 weist eine Spannungsquelle 8, einen Transformator 10 und eine Regeleinrichtung 12 auf. Gemäß des eingangs genannten Tagungsaufsatzes besteht die Spannungsquelle 8 aus einem pulsweitenmodulierten Pulsstromrichter, der gleichspannungsseitig mit einer Kondensatorbatterie verknüpft ist. Als Halbleiterbauelemente des Pulsstromrichters werden abschaltbare Leistungshalbleiterschalter, insbesondere Insulated-Gate-Bipolar-Transistoren (IGBTs) verwendet. Die Regeleinrichtung 12 ist als geschlossene Regelschleife aufgebaut, wobei die einzelnen Komponenten dieser Regeleinrichtung in der FIG 3 des eingangs genannten Tagungsaufsatzes dargestellt sind und im zugehörigen Text beschrieben sind.

Erfindungsgemäß ist elektrisch zum aktiven Filter 4 ein abgestimmtes Filter 14 geschaltet, das eine Reihenschaltung eines Kondensators C_{A} und einer Induktivität L_{A} aufweist. Diese beiden Elemente C_{A} und L_{A} des abgestimmten Filters 14, das auch als Ableitungszweig bezeichnet wird, werden so gewählt, daß der Ableitungszweig 14 bei Netzfrequenz eine sehr niedrige Impedanz aufweist. Hingegen weist dieser Ableitungszweig 14 im Frequenzbereich des aktiven Filters 4 eine hohe Impedanz auf.

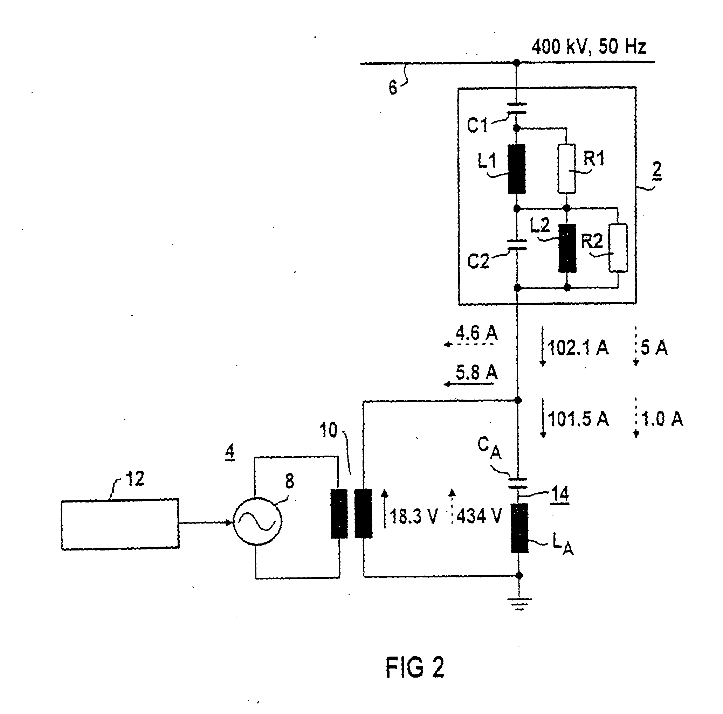

Bei einem Anwendungsbeispiel gemäß FIG 2 weist das Netz 6 einen Spannungswert von 400 kV und eine Frequenz von 50 Hz auf.

Außerdem soll das aktive Filter 4 die 23. Oberschwingung in der Netzspannung bekämpfen. Für die Elemente C1, L1, R1, C2, L2 und R2 des passiven Filters 2, die als ideal angenommen werden, sind folgende Werte angenommen worden:
C1 = 1,4 µF, L1 = 25 mH, R1 = 700 Ω
C2 = 2,5 µF, L2 = 14 mH, R2 = 400 Ω.

Der Kondensator C_{A} des Ableitungszweiges 14 weist einen Wert von 169 µF und seine Induktivität L_{A} einen komplexen Impedanzwert mit einem reellen Wert von 0,18 Ω und einen imaginären Wert von 60 mH. In dieser Darstellung sind die Strom- und Spannungswerte für die Grundschwingung jeweils mit einem durchgezogenen Pfeil und für Oberschwingungen jeweils mit einem unterbrochenen Pfeil dargestellt.

Unter der Annahme, daß der Strom der 23. Harmonischen, der durch das Hybridfilter fließen soll, einen Betrag von 5 A hat, ergeben sich die in der FIG 2 eingetragenen Strom- und Spannungswerte. Diesen Werten ist zu entnehmen, daß überwiegend die Grundschwingungskomponente des Filterstromes durch den Ableitungszweig 14 fließt, wogegen die Stromkomponente der 23. Harmonischen durch das aktive Filter 4 fließt. Wäre das elektrisch parallel geschaltete abgestimmte Filter 14 nicht vorhanden, so würde die gesamte Grundschwingungskomponente des Filterstromes über das aktive Filter 4 fließen. Da die Induktivität L_{A} dieses abgestimmten Filters 14 auch einen ohmschen Widerstand aufweist, teilt sich die Grundschwingungskomponente des Filterstromes entsprechend dem umgekehrten Verhältnis der parallelgeschalteten Widerstände auf.

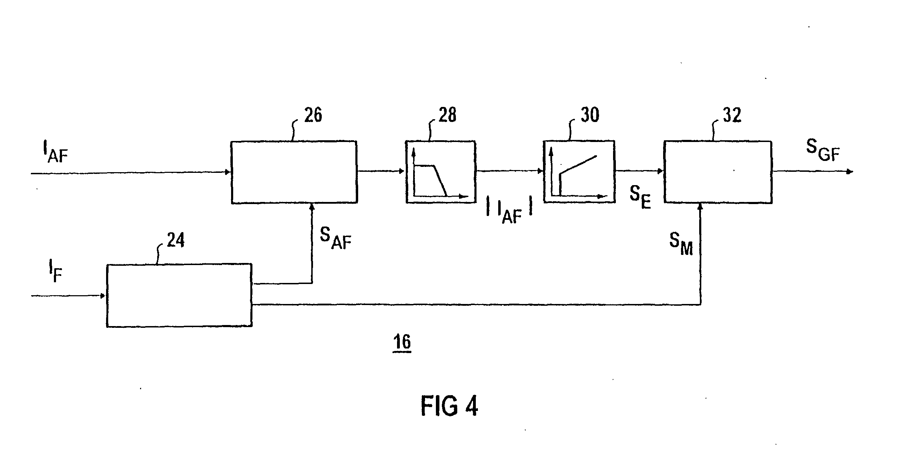

Dieses abgestimmte Filter 14 kann infolge von Komponententoleranzen und/oder Temperaturänderungen verstimmt werden, wodurch der minimale Anteil der Grundschwingungsstromkomponente, der durch das aktive Filter 4 fließt, erheblich ansteigen. Um den Anteil der Grundschwingungsstromkomponente durch das aktive Filter 4 zu kompensieren, sind bei einer zweiten Ausführungsform des Hybridfilters gemäß FIG 3 eine Regleranordnung 16, ein Addierer 18 und zwei Stromwandler 20 und 22 vorgesehen. Der Stromwandler 20 mißt den Filterstrom I_{F}, wogegen der Stromwandler 22 den Stromanteil I_{AF} durch das aktive Filter 4 mißt. In Abhängigkeit dieser beiden ermittelten Ströme I_{F} und I_{AF} ermittelt die Regleranordnung 16, deren vereinfachtes Blockschaltbild in FIG 4 näher dargestellt ist, ein Steuersignal S_{GF}. Aus diesem Steuersignal S_{GF} wird mittels des Addierers 18 und des Steuersignals S_{H} der Regeleinrichtung 12 des aktiven Filters 4 ein Summensteuersignal S_{GFH} erzeugt, das einem Steuereingang der Spannungsquelle 8 des aktiven Filters 4 zugeführt wird.

Die FIG 4 zeigt ein vereinfachtes Blockschaltbild der Regleranordnung 16 der FIG 3. Diese Regleranordnung 16 weist einen Referenzoszillator 24, einen Demodulator 26, einen Tiefpaß 28, einen Regler 30 und einen Modulator 32 auf. Der Referenzoszillator 24 ist eingangsseitig mit dem Ausgang des Stromwandlers 20 und der Demodulator 26 ist eingangsseitig mit dem Ausgang des Stromwandlers 22 verknüpft. Ausgangsseitig ist ein erster Ausgang des Referenzoszillators 24 mit einem weiteren Eingang des Demodulators 26 und ein zweiter Ausgang mit einem weiteren Eingang des Modulators 32 verbunden. Ausgangsseitig ist der Demodulator 26 mittels des Tiefpasses 28 mit nachgeschaltetem Regler 30 mit einem Eingang des Modulators 32 verknüpft, an dessen Ausgang das Steuersignal S_{GF} ansteht.

Der Referenzoszillator 24, an dessen Eingang der gemessene Filterstrom I_{F} ansteht, erzeugt einerseits ein sinusförmiges Signal S_{AF} mit einem konstantem Betrag und das in Phase mit dem gemessenen Filterstrom I_{F} ist und andererseits ein zweites sinusförmiges Signal S_{M} mit ebenfalls konstantem Betrag. Der Demodulator 26, an dessen Eingang der gemessene Strom I_{AF} durch das aktive Filter 4 ansteht, erzeugt mit Hilfe des generierten sinusförmigen Signals S_{AF} ein Signal, das sich zusammensetzt aus einem konstanten Wert und Oberwellen. Der konstante Wert entspricht dem Betrag |I_{AF}| der Grundschwingungskomponente des Stromes I_{AF} durch das aktive Filter 4. Mittels des Tiefpasses 28 erhält man diesen Betrag |I_{AF}| , der dem Regler 30, insbesondere einem PI-Regler, zugeführt wird. Am Ausgang des Reglers 30 steht ein Referenzsignal S_{E} an, aus dem in Abhängigkeit des generierten sinusförmigen Signals S_{M} mittels des Modulators 32 das Steuersignal S_{GF} generiert wird. Mittels diesem Steuersignal S_{GF} wird der Arbeitspunkt der Spannungsquelle 8 derart verändert, daß der Betrag |I_{AF}| zu Null wird. Sobald der Betrag |I_{AF}| zu Null geworden ist, fließt kein Anteil der Grundschwingungsstromkomponente I_{F} mehr durch das aktive Filter 4.

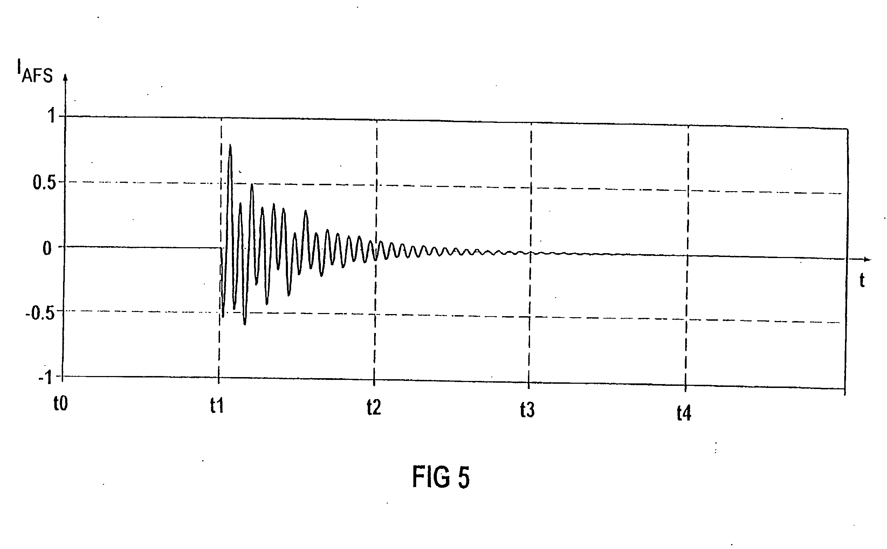

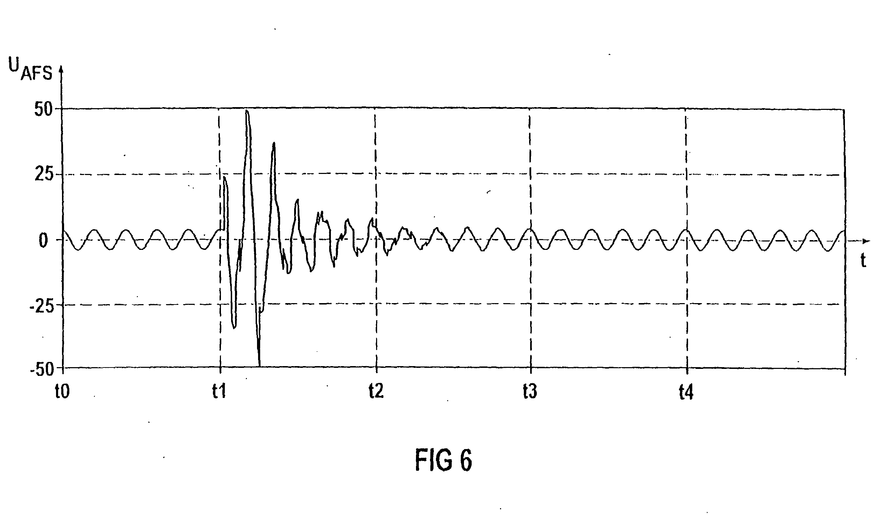

In den Figuren 5 und 6 sind die zeitlichen Verläufe der generierten Spannung U_{AFS} des aktiven Filters 4 und der Stromanteil I_{AFS} der Grundschwingungsstromkomponente I_{F}, der durch das aktive Filter fließt, jeweils in einem Diagramm über der Zeit t dargestellt. Diese Zeitverläufe gelten für eine Verstimmung des Ableitungszweiges 14, wobei der Wert der Induktivität L_{A} um ca. 2 % verstimmt wurde. Im Zeitintervall t1-t0 ist der Strom I_{AF} trotz der Verstimmung des Ableitungszweiges 14 Null. Dieses Ergebnis wird mittels einer generierten Spannung U_{AFS} des aktiven Filters 4 erreicht, deren Betrag minimal und deren Frequenz gleich der Netzfrequenz sind. Zum Zeitpunkt t1 ändert sich die Netzspannung. Durch diese Änderung der Netzspannung steigt der Stromanteil I_{AFS} der Grundschwingungsstromkomponente I_{F} sofort an und erreicht einen Wert von beispielsweise 750 A. Infolge dieses Stromanteils I_{AFS} wird die generierte Spannung U_{AFS} der Spannungsquelle 8 des aktiven Filters 4 infolge der Veränderung des von der Regleranordnung 16 generierten Steuersignals S_{GF} derart verändert, daß zum Zeitpunkt t3 der Stromanteil I_{AFS} der Grundschwingungsstromkomponente I_{F} wieder Null ist. Der Abstand zwischen den einzelnen Zeitpunkten t0 bis t4 beträgt jeweils 0,1 Sekunden.

Somit ist nach nur 0,2 Sekunden die auftretende Beanspruchung des aktiven Filters 4 infolge einer Änderung des Netzes 6 ausgeregelt. Ohne diese Regleranordnung 16 würde die Ausregelung einer derartigen Beanspruchung sehr viel länger dauern. Diese Zeitdauer hängt von der Zeitkonstanten des 50 Hz Schwingkreises ab, der vom Ableitungszweig 14, dem Transformator 10 und der Spannungsquelle 8 des aktiven Filters 4 gebildet wird. Außerdem zeigen diese beiden Zeitverläufe, daß auch im Dauerbetrieb des Hybridfilters der Stromanteil I_{AF} der Grundschwingungsstromkomponente I_{F} trotz Verstimmung des Ableitungszweiges 14 zu Null geregelt wird. Somit wird das aktive Filter 4 des Hybridfilters im Dauerbetrieb auch bei einer Verstimmung des Ableitungszweiges 14 nicht mit einer Grundschwingungsstromkomponente I_{F} belastet.

Somit kann bereits mit der Verwendung des Ableitungszweiges ein bekanntes Hybridfilter für ein Gleichstromnetz auch bei einem Wechselstromnetz eingesetzt werden, ohne daß das aktive Filter überdimensioniert werden muß.

## Patentansprüche

1. Hybridfilter für ein Wechselspannungsnetz (6), wobei das Hybridfilter einen passiven und aktiven Filter (2, 4) aufweist, die elektrisch in Reihe geschaltet sind, und wobei das aktive Filter (4) eine Spannungsquelle (8) aufweist,
**dadurch gekennzeichnet,**
**daß** elektrisch parallel zum aktiven Filter (4) ein abgestimmtes Filter (14) geschaltet ist, das auf die Nennfrequenz des Wechselspannungsnetzes (6) abgestimmt ist.

2. Hybridfilter nach Anspruch 1,
**dadurch gekennzeichnet,**
**daß** eine Regleranordnung (16) vorgesehen ist, die eingangsseitig mit zwei Stromwandlern (20, 22) und ausgangsseitig mittels eines Addierers (18) mit einem Steuereingang der Spannungsquelle (8) des aktiven Filters (4) verbunden ist, wobei von den beiden Stromwandlern (22, 20) einer dem aktiven Filter (4) und der andere dem passiven Filter (2) zugeordnet ist.

3. Hybridfilter nach Anspruch 1 oder 2,
**dadurch gekennzeichnet,**
**daß** als passives Filter (2) ein Doppelfilter vorgesehen ist.

4. Hybridfilter nach einem der Ansprüche 1 bis 3,
**dadurch gekennzeichnet,**
**daß** das aktive Filter (4) einem pulsweitenmodulierten Pulsstromrichter, der gleichspannungsseitig mit einer Kondensatorbatterie und wechselspannungsseitig mit einem Transformator (10) verknüpft ist, und eine Regeleinrichtung (12) aufweist, die ausgangsseitig mit einem Steuereingang des Pulsstromrichters verbunden ist.

5. Hybridfilter nach Anspruch 2,
**dadurch gekennzeichnet,**
**daß** die Regleranordnung (16) einen Referenzoszillator (24), einen Demodulator (26), einen Tiefpaß (28), einen Regler (30) und einen Modulator (32) aufweist, daß der Demodulator (26) eingangsseitig mit einem Ausgang des Stromwandlers (22) des aktiven Filters (4) und der Referenzoszillator (24) eingangsseitig mit einem Ausgang des Stromwandlers (20) des passiven Filters (2) verknüpft sind, daß ein erster Ausgang des Referenzoszillators (24) mit einem weiteren Eingang des Demodulators (26) und ein zweiter Ausgang des Referenzoszillators (24) mit einem weiteren Eingang des Modulators (32) verbunden sind und daß ein Ausgang des Demodulators (26) mittels des Tiefpasses (28) mit einem Eingang des Reglers (30) verknüpft ist, der ausgangsseitig mit einem Eingang des Modulators (32) verbunden ist.

## Claims

1. Hybrid filter for an AC mains system (6), with the hybrid filter having a passive and an active filter (2, 4) which are electrically connected in series, and with the active filter (4) having a voltage source (8),
**characterized**
**in that** a tuned filter (14), which is tuned to the rated frequency of the AC mains system (6), is electrically connected in parallel with the active filter (4).

2. Hybrid filter according to Claim 1,
**characterized**
**in that** a regulator arrangement (16) is provided, is connected on the input side to two current transformers (20, 22) and is connected on the output side by means of an adder (18) to a control input of the voltage source (8) of the active filter (4), with one of the two current transformers (22, 20) being associated with the active filter (4), and with the other being associated with the passive filter (2).

3. Hybrid filter according to Claim 1 or 2,
**characterized**
**in that** a double filter is provided as the passive filter (2).

4. Hybrid filter according to one of Claims 1 to 3,
**characterized**
**in that** the active filter (4) has a pulse-width-modulated pulsed-current converter, which is linked on the DC side to a capacitor bank and is linked on the AC side to a transformer (10), and has a regulating device (12) which is connected on the output side to a control input of the pulsed-current converter.

5. Hybrid filter according to Claim 2,
**characterized**
**in that** the regulator arrangement (16) has a reference oscillator (24), a demodulator (26), a low-pass filter (28), a regulator (30) and a modulator (32), in that the demodulator (26) is linked on the input side to an output of the current transformer (22) of the active filter (4), and the reference oscillator (24) is linked on the input side to an output of the current transformer (20) of the passive filter (2), in that a first output of the reference oscillator (24) is connected to a further input of the demodulator (26), and a second output of the reference oscillator (24) is connected to a further input of the modulator (32), and
**in that** one output of the demodulator (26) is linked by means of the low-pass filter (28) to one input of the regulator (30), which is connected on the output side to one input of the modulator (32).

## Revendications

1. Filtre hybride pour un réseau (6) à tension alternative, le filtre hybride ayant un filtre (2) passif et un filtre (4) actif qui sont montés en série et le filtre (4) actif ayant une source (8) de tension, **caractérisé en ce qu'**un filtre (14) accordé, qui est accordé sur la fréquence nominale du réseau (6) à tension alternative, est monté électriquement en parallèle au filtre (4) actif.

2. Filtre hybride suivant la revendication 1, **caractérisé en ce qu'**il est prévu un dispositif (16) de régulation qui est relié du côté de l'entrée à deux convertisseurs (20, 22) de courant et du côté de la sortie au moyen d'un additionneur (18) à une entrée de commande de la source (8) de tension du filtre (4) actif, et parmi les deux convertisseurs (22, 20) de courant, l'un est associé au filtre (4) actif et l'autre au filtre (2) passif.

3. Filtre hybride suivant la revendication 1 ou 2, **caractérisé en ce qu'**il est prévu un filtre double comme filtre (2) passif.

4. Filtre hybride suivant l'une des revendications 1 à 3, **caractérisé en ce que** le filtre (4) actif est un convertisseur de courant à impulsion modulée en largeur d'impulsion, qui est combiné du côté tension continue à une batterie de condensateurs et du côté tension alternative à un transformateur (10) et qui a un dispositif (12) de régulation, qui est relié du côté de la sortie à une entrée de commande du convertisseur de courant à impulsion.

5. Filtre hybride suivant la revendication 2, **caractérisé en ce que** le dispositif (16) de régulation comprend un oscillateur (24) de référence, un démodulateur (26), un passe-bas (28), un régulateur (30), un modulateur (32), **en ce que** le démodulateur (26) est combiné du côté de l'entrée à une sortie du convertisseur (22) de courant du filtre (4) actif et l'oscillateur (24) de référence est combiné du côté de l'entrée à une sortie du convertisseur (20) de courant du filtre (2) passif, **en ce qu'**une première sortie de l'oscillateur (24) de référence est reliée à une autre entrée du démodulateur (26) et une deuxième entrée de l'oscillateur (24) de référence à une autre entrée du modulateur (32) et **en ce qu'**une sortie du démodulateur (26) est combinée au moyen du passe-bas (28) à une entrée du régulateur (30) qui est relié du côté de la sortie à une entrée du modulateur (32).
